# EUROPEAN PATENT APPLICATION

(11) **EP 2 252 006 A1**
(43) Date of publication of application: **17.11.2010**
(21) Application number: 09160335.7
(22) Date of filing: 15.05.2009
(51) Int. Cl.: H04L 12/24

(54) **System and method for obtaining a classification of an identifier**

(71) Applicant: Panda Security S.L., 48001 Bilbao (ES)
(72) Inventor: Urzay Basarrate, Iñaki, 48001 Bilbao (ES); Gonzales Fuentes, Eduardo J., 48980 Santurtzi (ES); Ardanza Azcondo, Carlos, 48220 Abadiano (ES)
(74) Representative: ZBM Patents

(57) **Abstract**

A method for obtaining a classification of at least one identifier of at least one computer element is presented. The method involves the sending of identifiers between a sending client computing systemand a plurality of receiving client computing systems, with the objective of obtaining a classification of said identifier, which corresponds to a computer element. Alternatively, if a predetermined condition of reception is not reached, a further sending of the identifier may be performed to a server computing system. This way, the classifications may be found spread over a plurality of receiving client computing systems or a server, and the data traffic may be distributed over several paths instead of, for example, a unique path to a unique server computing system.

## Description

### Field of the Invention

The present invention relates to a method for obtaining a classification of at least one identifier of at least one computer element.

The invention also relates to a system and a computer program for obtaining a classification of at least one identifier, suitable for carrying out such a method.

Furthermore, the invention also relates to a system and method for sending data corresponding to an identifier of at least one computer element.

### Background art

Nowadays, systems for retrieving information about computer elements such as files, programs or other elements found in a computing system, exist, which are based in methods for obtaining information found in an external computer server. Such systems may be used, for example, whenever an anti virus scan is performed within a computing system, and information about the computer element which is object of the scan, is needed to perform a further action in it. Then, the computing system sends a query which comprises an identification of the computer element to an external computer server, which may comprise an updated database of information about computer elements. Then, the computer server may respond to said query with the desired information, in case it comprises it in its database.

On the other hand, the information required by a computing system may be, for example, an update of a file comprising information corresponding to the identifications of computer elements, and therefore, the computing system may perform a query periodically for updating said file.

These systems allow to have reliable information from a database which is queried, the database comprised or accessible to a computer server, but, however, a periodical query, even if it only is an incremental update of a file comprised in the computing system, requires a lot of bandwidth and resources from the distributing server. Thus, a main problem may be that, if the computer server responds to a normal amount of queries from computing systems, the responses may be processed in a slowly way, and it may be costly to maintain the service of the server.

Also, in this case, the server would be vulnerable to Denial-of-Service (DoS) attacks, and the solution of having the information spread in several computer servers would be very costly and inefficient if the servers comprised different information (all the information may not be accessible all of the time).

### Summary of the invention

Therefore, to alleviate the above described problems, it is an object of the present invention to provide a system and method for obtaining a classification of an identifier corresponding to a computer element, and hence a classification of the computer element, by using information about said identifier found in a plurality of computing systems.

This is achieved by providing, according to a first aspect of the invention, a method for obtaining a classification of at least one identifier of at least one computer element, in a sending client computing system, which is connected to a plurality of receiving client computing systems, the method comprising the steps of:
a) Selecting at least one computer element, within the sending client computing system;
b) Obtaining at least one identifier for each selected computer element;
c) Sending the obtained identifier to the plurality of receiving client computing systems, to retrieve data about the identifier;
e) Verifying if a predetermined condition of reception is reached;
f) In case of negative result of step (e), verifying if a predetermined number of responses comprising qualified data about the identifier, has been received from the receiving client computing systems;
g) In case of negative result of step (f), the control of the method returns to step (e);
h) In case of positive result of step (f), obtaining data about the identifier, from the received responses;
i) Obtaining a classification of the identifier, from the obtained data.

The selection of the computer element may be performed within the sending client computing system, but it is obvious that it may also be selected in one computing system and then it may be transferred to the sending client computing system for using it when performing the method according to the invention.

Also, another example of a normal performance would be that a computer element is selected in one client computing system, its identifier obtained within said client computing system, and then the identifier being transferred to the sending client computing system, for performing the above described method.

Furthermore, a computer element may be any element, found within the computing system, which is to be identified either by using its characteristics or features, or with an identification such as one performed by applying a calculation to the element. Therefore, an example of a characteristic would be, for example, information which identifies the computer element regarding its type of file: a computer file such as a text file, executable file, spreadsheet file, pdf file, audio file, image file, video file or any other type of file.

Also, a computer element may be a block of data such as a Windows register data, disk data block, memory data block or any other data block. Furthermore, it may be, for example, a URL address, an e-mail address, the body of an email message or part of it, or a body of an instant message or part of it, such as a MSN (R) message.

Also, an executing process or part of it, or any other data used during the execution of a file, a dll file or other modules found within a computer system may also be considered a computer element suitable to be identified (for example, a stack corresponding to a file being executed, an execution register, variable data, etc.).

In step (b), an identifier is obtained based on said computer element. More specifically, an identifier of a computer element may be any information which may help a computer system to identify the element, or recognize characteristics, behavior patterns or other features of said computer element, so the computer system is able to classify it, recommend an action to be done regarding the computer element, or so the system is able to relate the identifier to other bonus information about the computer element.

Examples of identifiers are listed below, in a non-limitative way, depending on the type of computer element which each one identifies (type of computer element / type of identifier):

### - File in disk:

- HASH (CRC, MD5, SHA-1, etc.) of the file;
- Complete name of the file, or complete path of the file plus its complete name;
- Properties of the file: size; name of the manufacturer or programmer; version; if it has any digital signature associated; fields of the digital signature such as the digital certificate serial number, the signatory, Certification Authority; date of creation and/or modification of the file; Data located in the Resources Section of the file such as: version, company, copyright; number of sections of the file; information about the sections, etc.
- Security classification (such as between goodware, malware or suspicious of being malware).

### - Running Process (process loaded in memory)

- HASH (CRC, MD5, SHA-1, etc.) of the image of the originating file in the disk;
- HASH (CRC, MD5, SHA-1, etc.) of a specific portion of the memory of the process (such as, for example, the code including the DLL which are loaded in the memory);
- Complete path, and complete name from where it has been loaded;
- Size in memory;
- Modules loaded by the process;
- Number of threats of the process;
- Opened handles;
- Security classification (such as between goodware, malware or suspicious of being malware).

### - Windows (R) Registry Entry:

- HASH (CRC, MD5, SHA-1, etc.) of the entry;
- Complete path, and complete name of the entry (registry key), and value (registry value or name-data pair);
- Security classification (such as between goodware, malware or suspicious of being malware).

### - Data block from the disk (such as an arbitrary number of sectors or clusters):

- HASH (CRC, MD5, SHA-1, etc.) of the block;
- Security classification (such as between goodware, malware or suspicious of being malware).

### - Data block of Memory:

- HASH (CRC, MD5, SHA-1, etc.) of the block;
- Security classification (such as between goodware, malware or suspicious of being malware).

### - E-mail address of a sender:

- HASH (CRC, MD5, SHA-1, etc.) of the e-mail address;
- Domain or associated ISP;
- Origin geolocation (country, city...) of the first SMTP server of the chain which sent the message;
- SMTP server which sends the message: IP, correspondence between IP and message domain depending on the MX register, or if the IP is static or dynamic.
- Address known as spammer (yes or no).

### - Body of an e-mail message:

- HASH (CRC, MD5, SHA-1, etc.) of the body of message;
- Valid or non-valid word proportion within the message;
- Blank spaces proportion within the message;
- Suspect URLs within the message (for example, pointing to executable files);
- Classified as spam (yes, no, or suspect).

### - Attached file of an e-mail message:

- HASH (CRC, MD5, SHA-1, etc.) of the attached file;
- Correspondence between the real format of the file, its extension and the content type MIME which is found in the header of the message. The possible identifiers may be: Mismatch between real format/extension/MIME type (yes or no), and the real format, extension and MIME type itself.

### - URL:

- HASH (CRC, MD5, SHA-1, etc.) of the URL;
- Domain or associated ISP;
- Depth of the route or path;
- Geolocalization;
- Dynamic or static IP;
- Security classification (such as between goodware, malware or suspicious of being malware).
- Genre classification (Downloads, Gaming, Adult content, etc.).

### - Data block from network packets intercepted in a network, said blocks from an arbitrary number of TCP or UDP packets, or data blocks from upper protocol levels, such as HTTP or others:

- HASH (CRC, MD5, SHA-1, etc.) of the block;
- Protocol;
- Origin and destination ports;
- Origin and destination IPs;
- Security classification (such as between goodware, malware or suspicious of being malware).

Therefore, the above list may be extended in many ways with other identifiers, and other computer elements may be object for its identification and the further obtaining of a classification.

In addition, sometimes a computer element may be used as an identifier of another computer element. For example a Windows Registry Entry, apart from being considered a computer element, can also be considered as an identifier of a running process.

Furthermore, the identifier corresponding to the computer element does not have to be unequivocal (like a direct calculation of, for example, an MD5 algorithm): it may comprise, for example, information about which behavior this computer element is showing in the computer, and, consequently, this information may be useful to determine which kind of computer element it is.

Said behavior may be, for example, the computer element copying, erasing, or altering any information within the computing system, closing a port of a connection such as an Internet connection, sending any message to another computing system, modifying the OS registry, stopping services within the OS, modifying data used by other computer elements, or modifying the security settings of an OS (such as a firewall or other security services).

A single identifier may be enough to help classifying a computer element, but there may exist identifiers corresponding to a computer element based on a combination of different identifiers which alone may not be useful, but are useful for its classification, when found in combination in one computer element.

Furthermore, an identifier may be more reliable or not for the identification of a computer element, or may be more or less unequivocal, based on the grade of identification that it provides to a computing system. For example, an identifier based on a hash calculated on a computer element may be more specific and/or reliable than an information relating to the extension of the file corresponding to the computer system (for example, the computer element being a .exe file).

Also, some cases may exist where the computer element as such may be used as an identifier. For example, if the computer element is a URL, it may also be used as an identifier, or, for example, its MD5 can also be used as identifier, that is, a data packet may be sent to a computing system, the packet comprising either the URL or its MD5 to be analyzed in the computing system.

The sending of the identifier to a plurality of receiving client computing systems may be performed depending on the needs of the computing system performing the present method: it may be performed whenever an anti virus scan is performed (for example, periodically), or if an anti virus detects that an unknown computer element is going to be executed for the first time in the computing system, or if a download is being performed from a communications network such as the Internet, etc.

Afterwards, a verification if a predetermined condition of reception is reached is performed, wherein this verification may be a plurality of possibilities: for example, the condition could be that a number of responses is obtained, or a number of responses comprising specific data is received. Another example could be that a counting of a period of time is ended.

Then, in case of negative result of step (e), a further verification is performed of if a predetermined number of responses comprising qualified data about the identifier, has been received from the receiving client computing systems.

This means that, for example, a predetermined number of responses may be needed to continue with the method, whether or not the data is more or less relevant; but, on the other hand, it may be needed only one response comprising a "more qualified" data about the identifier, to further continue with the following steps. Hence, it may be both relevant the predetermined number of responses and the level of relevance of the data comprised in the response (that is, if the data comprised in the responses is qualified enough).

Regarding the received responses, a case may be that a receiving computing system sends a response to the sending computing system, the response comprising data indicating that said receiving computing system does not comprise any information about the sent identifier. Thus, said response does not comprise qualified or relevant/useful data about the identifier, and is therefore ignored for the future obtaining of the classification. This is reflected in step (g), wherein the control of the method returns to step (e), for, in case that the condition is reached, verifying if any more responses have been received comprising qualified data about the identifier, in the following step.

In case that the predetermined number of responses comprising qualified data about the identifier has been received, step (h) is performed, wherein data about the identifier, corresponding to the computer element, is obtained from the received responses, and, furthermore, in step (i), a classification of the identifier is obtained, which corresponds to the computer element. Said classification may be obtained by means of a classifier which performs a classification based on a first predetermined selecting condition.

It may be noted that the obtained data from the received responses, corresponding to the sent identifier, may or may not be the same "qualified data" used for the previous verification, since a response may comprise both data used only for the verification, and data used only for the obtaining of the classification.

Therefore, as previously described, the data about the identifier may comprise a classification, which is an information associated with the identifier corresponding to the computer element, which helps identifying the behavior or identity of the computer element, and which may be, for example, a classification based on the security level of the computer element (for example, a classification between goodware, malware, suspicious of being malware or unknown), or a classification based on the type or purpose of the computer element (browser program, word processing program, game, mail client, etc...). This first example of classification may be one which classifies the element between a plurality of possible identities or behaviors. Said classification may be accompanied with additional information corresponding to the classification itself, such as, for example, the date of the last update of the classification.

Also, a classification may also be data corresponding to a recommended action to be taken by the computing system which comprises the computer element, regarding said computer element (erasing the computer element, renaming it, putting it in quarantine, warning the user about its existence, etc...); or it may be data corresponding to disinfection routines associated with the computer element.

Alternatively, the classification may also be a combination of the above described examples, such as a classification between a plurality of possible identities or behaviors of the computer element, or data about a recommended action to be performed by the computing system comprising the computer element. This way, there may be combinations of different kinds of classifications which are more reliable and effective whenever a computing system is trying to identify a computer element.

As it has been described, the classification corresponding to the identifier, corresponding to the computer element, is obtained from data, said data being obtained from a plurality of responses: therefore, said data obtained from each response, and the subsequent classifications, may be contradictory. For example, if data about the identifier received from a computing system is a classification, this classification may identify the computer element as malware, and another computing system may send data which may be a second classification identifying the computer element as goodware.

Thus, it may be necessary to obtain a unique classification based on the data obtained from different responses, each response coming from different computing systems.

Furthermore, this unique classification (global classification from here on) may be obtained locally within the first client computing system, based on the obtained data, from either one or a plurality of the received responses.

An example of the performance of the obtaining of a global classification for identifying the computer element, is by performing the obtaining by means of what will be known herein as a classifier.

A classifier may be a calculating means which is able to obtain a classification from a plurality of input data. This input data may be the obtained data from the received responses (corresponding to one or more identifiers, or corresponding to one or more responses to the sending of one identifier), or, for example, more specifically, a plurality of classifications (corresponding to one or more identifiers).

The objective of the use of a classifier is to obtain a global classification based on data obtained from responses. The use of the classifier is not always needed, but it is of great help when, for example, lots of information is received.

Furthermore, the classifier may be based, for example, on an artificial neural network. An example may be an adaptative system, which would be able to obtain the global classification corresponding to a computer element based on, for example, one or more different obtained responses, said obtained global classification not necessarily being unique.

One example of the performance of a classifier, would be the selection of a classification, obtained from one response among all the received responses, based on a corresponding time stamp parameter. The condition for selecting the classification would be to choose the classification corresponding to the response comprising the data with the latest time stamp, that is, the most recently downloaded or modified one, ensuring this way to get the most updated correct classification.

Another performance could be a selection based on the origin computing system of the response. This way, there would be more "reliable" computing systems than others, and the selection would be performed by, for example, selecting the response coming from the most reliable computing system or the most reliable group of computing systems, from the plurality of receiving client computing systems.

Also, when a plurality of responses is received, comprising different data or data which leads to different classifications or identifications of the computer element, the condition could be to select the classification which most of the responses refer to, that is, the one the majority of the computing systems have sent in their responses. A further example of the use of the classifier would be to use as input data all qualified data received from different responses, whether the responses are corresponding to the same identifier or different identifiers, and the responses coming from either one client computing system or different computing systems, using, this way, as much information as possible for the obtaining of a global classification which may be more reliable or accurate than a global classification obtained, for example, from the data obtained from responses corresponding to one identifier.

According to a preferred embodiment of the invention, step (e) of verification comprises the sub steps of starting a counting of a predetermined period of time, and verifying if the counting of the predetermined period of time has ended.

Therefore, in this specific embodiment, the predetermined condition to be reached is that a counting of a predetermined period of time expires.

This way, an example of performance would be that, before step (e), a counting of a predetermined period of time is started, this being performed, for example, by an internal timer comprised in the computing system. This timer is used so the computing system waits for responses (more specifically, a predetermined number of responses which comprise qualified data) during the predetermined period of time, and, depending on the response or if there is no response at all, the method continues with one or another step.

Furthermore, a verification of the finalization of the counting is performed, and, in case of negative result (that is, the counting of the period time has not ended), a verification of if a predetermined number of responses comprising qualified data about the sent identifier have been received is performed.

This way, after the sending of the identifier to a plurality of receiving client computing systems, the computing system waits (during a period of time) for a predetermined number of responses, which may be only one, from either one or a plurality of the receiving computing systems. More specifically, these responses have to comprise qualified data about the identifier which will be used for obtaining a classification from the identifier.

According to a further preferred embodiment of the invention, the sending client computing system is further connected to a server computing system, the method further comprising a step (j) wherein, in case of positive result of step (e), the following steps are executed:
k) Sending the obtained identifier to the server computing system to retrieve data about the obtained identifier;
l) Obtaining the data about the sent identifier, from a response received from the server computing system;
m) Obtaining a classification of the identifier, from the obtained data of step (I).

Thus, if the predetermined condition is not reached, the sending computing system may send the identifier to the server computing system, which may comprise updated information about the identifier.

This way, a reliable classification of the identifier corresponding to the computer element is obtained in case that the plurality of receiving computing systems is not enough to obtain said classification. Since the data about the identifiers may be spread over the plurality of receiving client computing systems by the performance of the present method for obtaining a classification, it is not certain that a classification of all the possible identifiers corresponding to all the computer elements, is to be found in at least one of said plurality of receiving client computing systems.

The location of the server computing system and the computing systems may be a plurality of possibilities. For example, the server may be located in one network outside the network which comprises the computing system and the plurality of receiving computing systems, both networks connected through a global communications network such as the Internet. Also, for example, the server computing system may be located in the same network as all the computing systems.

According to another preferred embodiment, in step (b) a plurality of identifiers is obtained; in step (c) the plurality of identifiers is sent; and step (f) is a verification of if a predetermined number of responses comprising qualified data about the plurality of sent identifiers, has been received; and the method further comprises a step (y) performed instead of step (i), and after step (h), of obtaining a global classification of the plurality of identifiers, from the obtained data.

This way, by sending a plurality of identifiers, more information corresponding to the computer element is retrieved and sent to the plurality of receiving computing systems, and a more accurate classification or set of classifications corresponding to the identifiers (named herein a global classification) may be obtained, the identifiers corresponding to the computer element, thus being the identification of the computer element more accurate and/or reliable.

Firstly, the plurality of identifiers may be a set of different identifiers as previously described, which, in combination, may lead to an obtaining of a more accurate and/or reliable global classification of the identifiers corresponding to the computer element.

The sending of the identifiers is performed in such a way that all or a part of them is sent to the plurality of receiving client computing systems, and, subsequently, a plurality of responses corresponding to each identifier may be received. Also, the predetermined number of responses comprising qualified data about each identifier may be different depending on each specific identifier.

Then, when the responses are finally received, a global classification is obtained, which will help to classify the computer element and/or is information or instructions related to the computer element, the global classification being based on data comprised in each response, the responses corresponding to part or all the sent identifiers.

It has to be noted that, in all of the previously described cases, whenever a system sends a plurality of identifiers, the responses to said plurality identifiers may be, as described, one response corresponding to each identifier, or a response corresponding to a combination of several identifiers. For example, if a sending computing system sends two identifiers, a receiving computing system may respond with a first response comprising data about the first identifier, and a second response comprising data about the second identifier. Or, in another case, the receiving computing system may send a response comprising data about the combination of the first and the second identifier.

Furthermore, it is obvious from the above described that a combination of cases may occur, where a receiving computing system sends responses corresponding to single identifiers, and a response or several responses corresponding to a combination of said identifiers.

According to a preferred embodiment, in step (i) the obtaining of the classification of the identifier is performed by means of a classifier which performs a classification based on a first predetermined selecting condition.

According to a further embodiment, in step (y) the obtaining of the global classification of the plurality of identifiers is performed by means of a classifier which performs a classification based on a second predetermined selecting condition.

According to another preferred embodiment, in step (i), the obtained classification of the identifier comprises recommended actions to be taken regarding the computer element corresponding to the sent identifier.

According to a further embodiment, in step (m), the obtained classification of the identifier comprises recommended actions to be taken regarding the computer element corresponding to the sent identifier.

According to an additional preferred embodiment, in step (b), the obtained identifier of the computer element is a signature of the computer element.

A signature may be, more precisely, for example, a digital signature in the form of a code generated from a part or all the computer element. Examples of normal signatures are codes generated by applying a Hash function, such as an MD5 hash function, which, when applied to a portion of code (in this case, the computer element), the digital signature is obtained.

According to another preferred embodiment, in step (b) a plurality of identifiers corresponding to the computer element is obtained; in step (c) the plurality of identifiers is sent; and step (f) is a verification of if a predetermined number of responses comprising qualified data about the plurality of sent identifiers, has been received; and the method further comprises a step (y2) of obtaining an individual classification for each identifier, from the qualified data from the responses from each different computer system, said responses corresponding to each separate identifier, and a step (z2) of obtaining a global classification of the identifiers corresponding to the computer element, from the obtained individual classifications of each different identifier.

This way, the obtaining of the global classification may be obtained by performing it in two steps, such as step (y2) and (z2), obtaining first an individual classification for each sent identifier, and then a global classification, which will be related to the computer element, based on said individual classifications.

More specifically, the method comprises step (y2) of obtaining an individual classification for each identifier. Said individual classification may be obtained for the identifiers from which a predetermined number of corresponding responses have been received. This way, an individual classification for each identifier is obtained, based on the qualified data comprised in the responses from different computing systems, and there is a possibility that the individual classifications are different depending on which identifier they correspond.

Therefore, the method further comprises step (z2) of obtaining a global classification of the identifiers corresponding to the computer element, based on each individual classification. This way, a global classification for the computer element is obtained based on individual classifications of a plurality of identifiers corresponding to the computer element, the global classification being more reliable and/or accurate.

As previously described on the definition of a classification, the global classification may identify the computer element and/or suggest actions to be taken over the computer element. Furthermore, the all of the above described classifiers may comprise a predetermined condition for performing the obtaining of each classification, being for example, a suitable one for each specific case.

According to a second aspect of the invention, a method for obtaining a classification of at least one identifier of at least one computer element, in a sending client computing system, is provided, the sending client computing system being connected to a plurality of receiving client computing systems, the method comprising:
n) Selecting at least one computer element, within the sending client computing system;
o) Obtaining at least one identifier for each selected computer element;
p) Sending the obtained identifier to the plurality of receiving client computing systems, to retrieve data about the identifier;
q) Verifying if a predetermined number of responses comprising qualified data about the identifier, has been received from the receiving client computing systems;
r) In case of positive result of step (q), obtaining data about the identifier, from the received responses;
s) Obtaining a classification of the identifier, from the obtained data.

According to a preferred embodiment, the sending computer client system is further connected to a server computing system, the method further comprising a step (t) wherein, in case of negative result of step (q), the following steps are executed:
u) Sending the obtained identifier to the server computing system to retrieve data about the obtained identifier;
w) Obtaining the data about the sent identifier, from a response received from the server computing system;
x) Obtaining a classification of the identifier, from the obtained data of step (w).

According to a third aspect of the invention, it is provided a system for obtaining a classification of at least one identifier of at least one computer element, in a sending client computing system, which is connected to a plurality of receiving client computing systems, the system comprising means for selecting at least one computer element, within the sending client computing system; means for obtaining at least one identifier for each selected computer element; means for sending the obtained identifier to the plurality of receiving client computing systems, to retrieve data about the identifier; means for verifying if a predetermined condition of reception is reached; means for verifying if a predetermined number of responses comprising qualified data about the identifier, has been received from the receiving client computing systems; means for obtaining data about the identifier, from the received responses; and means for obtaining a classification of the identifier, from the obtained data.

According to a fourth aspect of the invention, it is provided a system for obtaining a classification of at least one identifier of at least one computer element, in a sending client computing system, which is connected to a plurality of receiving client computing systems, the system comprising means for selecting at least one computer element, within the sending client computing system; means for obtaining at least one identifier for each selected computer element; means for sending the obtained identifier to the plurality of receiving client computing systems, to retrieve data about the identifier; means for verifying if a predetermined number of responses comprising qualified data about the identifier, has been received from the receiving client computing systems; means for obtaining data about the identifier, from the received responses; and means for obtaining a classification of the identifier, from the obtained data.

According to another aspect of the invention, a method for sending, from a receiving client computing system, data corresponding to an identifier of at least one computer element, is provided, wherein the receiving system comprises a module for obtaining data corresponding to an identifier, and is further connected with a plurality of sending client computing systems as described, the method comprising:
a1) Receiving at least one identifier, from one of the plurality of sending client computing systems;
a2) Obtaining data corresponding to the received identifier, and sending the data to the sending client computing system which sent the identifier.

According to a preferred embodiment, step (a2) of the obtaining of data comprises the sub steps of generating data corresponding to the identifier based on said identifier and sending the generated data.

According to an alternative embodiment, the module for obtaining data comprise means for accessing a repository, the repository comprising data corresponding to identifiers, and wherein step (a2) comprises the sub steps of obtaining data corresponding to the received identifier from the repository and sending the obtained data.

Furthermore, the method comprises a step (a3) of verifying if the received identifier comprises additional information not found in the data corresponding to the received identifier in the repository, and, in case of positive result, further comprises a step (a4) of storing in the repository said additional information.

An example of such situation may be that, for example, the receiving client computing system has received two identifiers and, it has obtained and sent data corresponding to only the first identifier, because it couldn't obtain data from the second identifier. This way, the additional information, in this case, would be the second identifier, and it may be stored in the repository.

Therefore, said additional information may be, for example, a received identifier whose information cannot be obtained by the receiving computing system.

According to a further aspect of the invention, a system for sending data, from a receiving client computing system, is provided, said data corresponding to an identifier of at least one computer element, the receiving system comprising a module for obtaining data corresponding to an identifier, and being further connected with a plurality of sending client computing systems comprising a system for obtaining a classification of at least one identifier as previously described, the system for sending data comprising means for receiving at least one identifier, from one of the plurality of sending client computing systems, and means for obtaining data corresponding to the received identifier, and sending the data to the sending client computing system which sent the identifier.

According to another aspect, the invention provides a computer program product comprising program instructions for causing a computer to perform the methods for obtaining a classification and the method for sending data corresponding to an identifier of the present invention. Said computer program may be embodied on storing means (for example, on a record medium, on a computer memory or on a read-only memory) or carried on a carrier signal (for example, on an electrical or optical carrier signal).

It has to be understood that in all the above described systems, all of the described means may be embodied either in a computer program module or in a computer system corresponding to each means, or any combination of both. Also, several means may be comprised in the same module of a computer program or the same computer system.

### Brief description of the drawings

An embodiment of the present invention will be described in the following, only by way of non-limiting example, with reference to the appended drawings, in which:
Figure 1 illustrates a system for obtaining a classification of an identifier according to a preferred embodiment of the present invention.
Figure 2A illustrates another embodiment of the system for obtaining a classification according to the present invention.
Figure 2B illustrates a further embodiment of the system for obtaining a classification according to the present invention.

### Preferred embodiment

In the following, several preferred embodiments of the invention will be described, according to the figures included herein, where different types of connections between different computing systems may be depicted, according to the present invention.

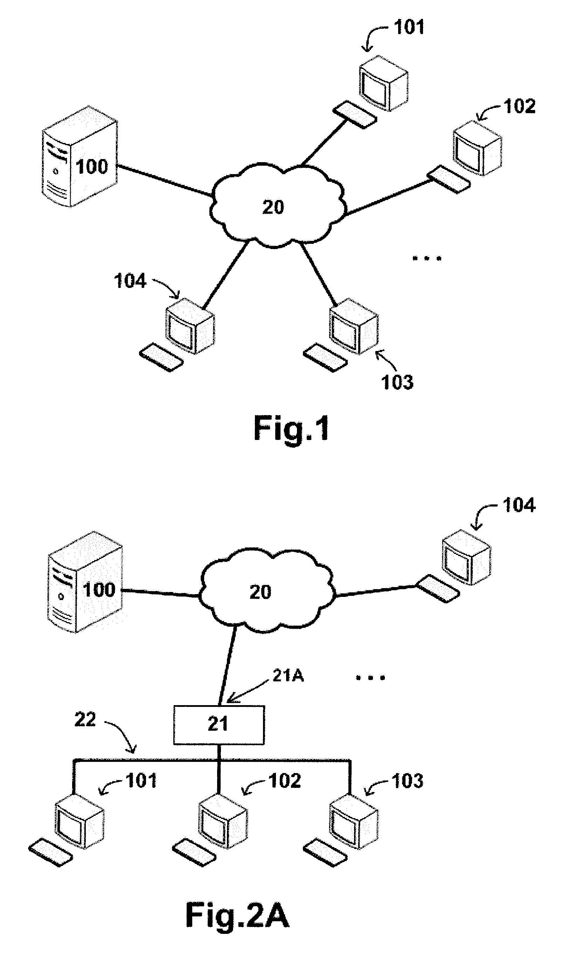

Firstly, as illustrated in Figure 1, the system for obtaining a classification of at least one identifier of at least one computer element, in a client computing system, is shown, wherein a sending client computing system (client terminal hereinafter) 101 is connected to a plurality of receiving client computing systems (client terminals) 102, 103, 104, and to a server computing system (central server hereinafter) 100, through a global communications network 20 such as the Internet.

Furthermore, the central server 100 comprises a malware/goodware database of executable files wherein an updated list of unique identifiers such as different types of signatures and its corresponding information (classification between goodware, malware and unknown) is found.

In this embodiment, since the client terminals are connected directly to the Internet, each client terminal and the central server has a public IP address.

Although it is possible to find this specific configuration of the client terminals and the central server, it is rarely seen since normally client terminals such as PCs are connected to a Firewall, Router or other devices which separate them from the Internet by means of Network Address Translator (NAT) mechanism, although in cases of a single private client terminal (such as a private domestic connection) being connected to the Internet, the present configuration may be found.

In this particular embodiment, the system is able to perform a method for obtaining a classification of one or more identifiers after it has performed an initialization process. This initialization performed in a client computing system comprises obtaining a list of available client terminals of the system.

This obtaining may be performed by querying for the list of available clients to the central server 100 or another computing system (or central server) which may be suitable for responding with an updated list of available client terminals.

Then, the server, after verifying that the client terminal is part of the system, sends to the client terminal a list of available client terminals which may comprise Machine Identifiers, its IP addresses and ports, and other relevant information for establishing a communication with each available terminal.

Also, more features for each terminal may be comprised in the list, such as common features among all the terminals, which may help to "group" them for communicating only with a sub-list within the list of available terminals.

The list of available nodes may also be updated by querying other client terminals, and therefore, each list that each terminal has may not be the same, since, for example, some lists may not be as updated as others. In this particular embodiment, the following lists of available terminals according to each preferred embodiment, will be the lists that the sending client terminal 101 may comprise for each example.

Furthermore, according to this preferred embodiment, the method for obtaining a classification of three identifiers from one computer element in the sending client terminal 101, comprises:
a) Selecting the computer element, within the sending client terminal 101;
b) Obtaining three identifiers of the selected computer element;
c) Sending the obtained identifiers to the plurality of receiving client terminals (102, 103, 104), to retrieve data about the identifiers;
d) Starting a counting of a predetermined period of time;
e) Verifying if the counting of the predetermined period of time has ended.
f) In case of negative result of step e), verifying if a predetermined number of responses comprising qualified data about the identifiers, have been received from the receiving client terminals (101, 102, 103);
g) In case of negative result of step f), the control of the method returns to step e);
h) In case of positive result of step f), obtaining data about the identifiers, from the received responses;
i) Obtaining a global classification of the identifiers, from the obtained data, by means of a classifier.
   j) In case of positive result of step e), the following steps are executed:
   k) Sending the three obtained identifiers to the central server 100 to retrieve data about the obtained identifiers;
   l) Obtaining the data about the sent identifier, from a response received from the central server 100;
   m) Obtaining a global classification of the identifiers, from the obtained data of step (I).

In this specific embodiment, the selected computer element is an executable file stored in the hard drive of the client terminal 101, and the sent identifiers are an MD5 hash of the file, the complete path and name of the file, and the size of the file.

After selecting the file stored in the hard drive of terminal 101 and obtaining said three identifiers, these identifiers are sent to all the other client terminals 102, 103 104, whose IPs, ports and Machine IDs are found in a list which terminal 101 has. Furthermore, the list is updated periodically so each terminal knows the existence of all the other terminals of the system, and knows if any terminal is no longer connected, or the addition of another terminal to the system.

Also, when sending the identifier, it is encapsulated in a data protocol such as the http protocol and is sent to a list of known client terminals. The sending of the identifier may be performed to all the terminals of the list of terminals or a sub-set of it, for the optimization of the data traffic between the sending client terminal and the other client terminals.

**Table 1: List of available Terminals**

| Client Terminal | IP Address | Port Number | Machine ID |
|---|---|---|---|
| 101 | 153.150.23.12 | P1 | ID_101 |
| 102 | 142.178.11.23 | P1 | ID_102 |
| 103 | 211.198.100.230 | P1 | ID_103 |
| 104 | 92.111.2.25 | P1 | ID_104 |

As seen in Table 1, according to this embodiment, the IP addresses assigned to each client terminal within the system are the IP addresses used for the list of available terminals. Each terminal in the system contacts directly with the other terminals of the list by using a default port P1.

It has to be noted that the method for obtaining a classification according to the present invention, and more specifically, to the present preferred embodiment, may be performed by any of the client terminals described herein (101, 102, 103, 104), using as the plurality of receiving client systems the rest of the client terminals found in the example of this embodiment, and, furthermore, the method may be performed by any computing system also found in the following described embodiments according to the invention.

According to a second preferred embodiment, as illustrated in Figure 2A, client terminals 101, 102 and 103 are connected within the same network 22 to a Network Address Translator (NAT) device 21, which separates this first network 22 from the Internet 20, where the NAT 21 is connected to the central server 100 and to another client terminal 104.

The network 22 where client terminals 101, 102 and 103 and the NAT device 21 are connected, may be a LAN type network, and therefore, any other terminal or server not found within the LAN 22 is unable to reach directly any of the terminals found within the LAN 22, unless specified by the NAT device.

When compared to the embodiment shown in Figure 1, the preferred embodiment of Figure 2A shows a possible configuration according to the present invention, which is more likely to be found in real life.

When implemented, this configuration also comprises a list of all the terminals, which each terminal has, and which is updated regularly so all the terminals know who to send the identifiers when performing the method according to the preferred embodiment.

Furthermore, in order to perform the method according to the present invention in a more efficient way, data should be able to be shared among the terminals connected to the Internet, by allowing transmissions of data between all the terminals and the central server 100. This implies that IP addresses in the list of terminals should be public. Since an undetermined high number of terminals may be located behind a NAT device (that is, within a LAN network such as LAN 22 from this embodiment) and terminals behind a NAT device are not directly reachable from a terminal connected outside the LAN network, it is necessary to traverse the NAT devices. This is performed by mapping the public IP address of the NAT device 21A (for example, by using a router) with different private IP addresses (corresponding to terminals 101, 102 and 103), using as many port numbers of the public NAT IP 21 A as terminals are located behind the NAT device 21.

**Table 2: List of available Terminals**

| Client Terminal | IP Address | Port Number | Machine ID |
|---|---|---|---|
| 101 | 153.150.23.12 | P1 | ID_101 |
| 102 | 153.150.23.12 | P2 | ID_102 |
| 103 | 153.150.23.12 | P3 | ID_103 |
| 104 | 155.50.3.112 | P1 | ID_104 |

In summary, as shown in Table 2, the external public IP address of the corresponding NAT device 21A must be used to represent a terminal behind a NAT device. In order to properly communicate to different terminals behind the same NAT, different ports are used to address each terminal (P1, P2 and P3 of IP 153.150.23.12 corresponding to clients 101, 102 and 103 respectively).

Therefore, the list of available client terminals, in this case, may include always public IP addresses, different port numbers for each terminal within LANs connected to the Internet through a NAT device, and its machine IDs.

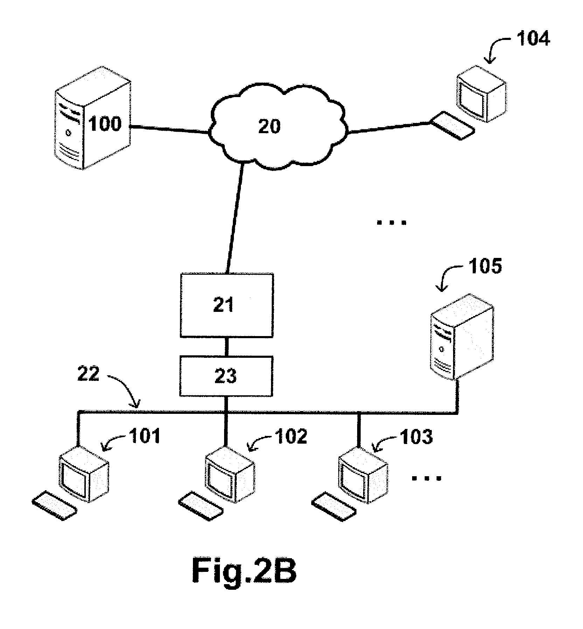

Figure 2B shows a third possible embodiment according to the present invention, similar to the one depicted in Figure 2A, and wherein LAN network 22 has further connected a distributing server 105 and a Firewall 23 which protects the LAN 22 from external connections. The LAN 22, in this case, represents a "corporate network".

More specifically, some terminals are directly connected to the Internet (104), some other terminals (101, 102, 103) are located behind a NAT device 21 and a Firewall 23, like in a corporate network, and some others (not shown) may be located within a Home or domestic Network, behind a second NAT. This is also a common embodiment which can be found in real life.

As in Figure 2A, in the embodiment of Figure 2B, terminals behind a NAT device have private IP addresses and therefore they are not directly reachable from outside LAN 22. The NAT has to be traversed in order for an external terminal to contact a terminal behind a NAT device (in this case, any of terminals 101-103 and distributing server 105). However, in the present embodiment, all terminals except one within the corporate network are not reachable from outside said network. In this case the only terminal which can send and receive queries from other terminals outside the corporate network when performing the method according to the present invention is the distributing server 105, which performs the functions similar to what is known as a Proxy server for terminals within the network 22.

**Table 3A: List of available Terminals**

| Client Terminal | IP Address | Port Number | Machine ID |
|---|---|---|---|
| 104 | 155.50.3.112 | P1 | ID_104 |
| 105 | 153.150.23.12 | P1 | ID_105 |

Table 3A shows a list of available terminals which communicate through the Internet. That is, it comprises the terminals connected directly to the Internet (104), and the only terminal found in the corporate network 22 (in this case, the distributing server 105) which is reachable from the outside of the network 22. In case that, for example, other terminals were connected to the Internet through a NAT device as described in the embodiment of Figure 2A, the list would also comprise the external IP address of the NAT device and a different port corresponding to each terminal connected to said NAT.

Furthermore, Table 3A may be comprised in any of the terminals connected to the Internet (in this case, terminal 104) or any server behind a NAT device, which is the only terminal found inside a corporate network which is reachable from the Internet (in this case 105), and therefore, the list is not found in the client terminal 101, as the previously described ones.

**Table 3B: List of available Terminals - Inside Corporate Network**

| Client Terminal | IP Address | Port Number | Machine ID |
|---|---|---|---|
| 101 | 192.168.1.1 | P1 | ID_101 |
| 102 | 192.168.1.2 | P1 | ID_102 |
| 103 | 192.168.1.3 | P1 | ID_103 |

Table 3B shows a second list of available terminals comprising terminals inside the corporate network 22.

In this scenario two different performances shall be distinguished:
Firstly, as previously described, terminals which are not part of the corporate network 22 are, like previous embodiments, represented either by their own public IP address (Table 3A, 104) or by the public IP address of the corresponding NAT device providing access to the Internet (in a similar way as terminals 101, 102 and 103 of the embodiment shown in Figure 2A). Like before, the list of available terminals shall include public IP addresses, and different port numbers and machine IDs for each terminal, the list itself being comprised in the distributing server 105.
Secondly, according to this implementation, as depicted, the list of available terminals for terminals within the corporate network may only comprise terminals which are part of the corporate network (Table 3B). One terminal within the corporate network 22 shall preferably act as a Proxy Server (distributing server 105), acting as the central server for the rest of the terminals inside the network 22, and, when a terminal performs a query (the sending of an identifier), in case none of the terminals knows the answer, a further sending of the identifier to the distributing server 105 is performed. If the distributing server 105 does not know the answer, it will relay the query to its own list of nodes (with public IP addresses, Table 3A) and, in case none of the terminals of this second list knows the answer, it will ultimately relay it to the central server 100.

In this case, just a single terminal within the corporate network (distributing server 105) shares its knowledge with the rest of terminals outside of the corporate network. Incoming queries from outside the network, which are directed to the NAT device in port P1 must be routed to the distributing server 105, and, therefore, port P1 must be opened in the Firewall 23 for IP address of server 105, as prerequisite.

Of course, terminals within a corporate network may theoretically work as any other terminal in the system, being reachable from the outside. However this may cause excessive inbound and outbound traffic and is thus not advisable, and besides that, distributing server 105 may usually comprise more information than any other terminal connected inside the corporate network 22.

A second possible embodiment according to Figure 2B may be that, alternatively, the distributing server 105 maintains a mirror copy of the information corresponding to the identifiers (the malware/goodware database) of server 100, which can be updated periodically. If this mirror copy is performed, the latency (the time needed to get an answer to a query) shall decrease for terminals within the corporate network 22, since most of the answers will be known by the distributing server 105.

It may be noted that any combination of the previous embodiments may be found.

Although the present invention has been described in detail for purpose of illustration, it is understood that such detail is solely for that purpose, and variations can be made therein by those skilled in the art without departing from the scope of the invention.

Thus, while the preferred embodiments of the methods and of the systems have been described in reference to the environment in which they were developed, they are merely illustrative of the principles of the invention. Other embodiments and configurations may be devised without departing from the scope of the appended claims.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. A method for obtaining a classification of at least one identifier of at least one computer element, in a sending client computing system, which is connected to a plurality of receiving client computing systems, the method comprising the steps of:
a) Selecting at least one computer element, within the sending client computing system;
b) Obtaining at least one identifier for each selected computer element;
c) Sending the obtained identifier to the plurality of receiving client computing systems, to retrieve data about the identifier;
e) Verifying if a predetermined condition of reception is reached;
f) In case of negative result of step (e), verifying if a predetermined number of responses comprising qualified data about the identifier, has been received from the receiving client computing systems;
g) In case of negative result of step (f), the control of the method returns to step (e);
h) In case of positive result of step (f), obtaining data about the identifier, from the received responses;
i) Obtaining a classification of the identifier, from the obtained data.

2. A method according to claim 1 wherein step (e) of verification comprises the sub steps of starting a counting of a predetermined period of time, and verifying if the counting of the predetermined period of time has ended.

3. A method according to claim 1 or 2 wherein the sending client computing system is further connected to a server computing system, the method further comprising a step (j) wherein, in case of positive result of step (e), the following steps are executed:
k) Sending the obtained identifier to the server computing system to retrieve data about the obtained identifier;
l) Obtaining the data about the sent identifier, from a response received from the server computing system;
m) Obtaining a classification of the identifier, from the obtained data of step (I).

4. A method according to any of claims 1 to 3 wherein, in step (b) a plurality of identifiers is obtained; in step (c) the plurality of identifiers is sent; and step (f) is a verification of if a predetermined number of responses comprising qualified data about the plurality of sent identifiers, has been received; and the method further comprises a step (y) performed instead of step (i), and after step (h), of obtaining a global classification of the plurality of identifiers, from the obtained data.

5. A method according to any of claims 1 to 3 wherein in step (i) the obtaining of the classification of the identifier is performed by means of a classifier which performs a classification based on a first predetermined selecting condition.

6. A method according to claim 4 wherein in step (y) the obtaining of the global classification of the plurality of identifiers is performed by means of a classifier which performs a classification based on a second predetermined selecting condition.

7. A method according to claims 1 to 6, wherein in step (i), the obtained classification of the identifier comprises recommended actions to be taken regarding the computer element corresponding to the sent identifier.

8. A method according to any of claims 3 to 7, wherein in step (m), the obtained classification of the identifier comprises recommended actions to be taken regarding the computer element corresponding to the sent identifier.

9. A method according to claims 1 to 8, wherein in step (b), the obtained identifier of the computer element is a signature of the computer element.

10. A method for obtaining a classification of at least one identifier of at least one computer element, in a sending client computing system, which is connected to a plurality of receiving client computing systems, the method comprising:
n) Selecting at least one computer element, within the sending client computing system;
o) Obtaining at least one identifier for each selected computer element;
p) Sending the obtained identifier to the plurality of receiving client computing systems, to retrieve data about the identifier;
q) Verifying if a predetermined number of responses comprising qualified data about the identifier, has been received from the receiving client computing systems;
r) In case of positive result of step (q), obtaining data about the identifier, from the received responses;
s) Obtaining a classification of the identifier, from the obtained data.

11. A method according to claim 10 wherein the sending computer client system is further connected to a server computing system, the method further comprising a step (t) wherein, in case of negative result of step (q), the following steps are executed:
u) Sending the obtained identifier to the server computing system to retrieve data about the obtained identifier;
w) Obtaining the data about the sent identifier, from a response received from the server computing system;
x) Obtaining a classification of the identifier, from the obtained data of step (w).

12. System for obtaining a classification of at least one identifier of at least one computer element, in a sending client computing system, which is connected to a plurality of receiving client computing systems, the system comprising means for selecting at least one computer element, within the sending client computing system; means for obtaining at least one identifier for each selected computer element; means for sending the obtained identifier to the plurality of receiving client computing systems, to retrieve data about the identifier; means for verifying if a predetermined condition of reception is reached; means for verifying if a predetermined number of responses comprising qualified data about the identifier, has been received from the receiving client computing systems; means for obtaining data about the identifier, from the received responses; and means for obtaining a classification of the identifier, from the obtained data.

13. System for obtaining a classification of at least one identifier of at least one computer element, in a sending client computing system, which is connected to a plurality of receiving client computing systems, the system comprising means for selecting at least one computer element, within the sending client computing system; means for obtaining at least one identifier for each selected computer element; means for sending the obtained identifier to the plurality of receiving client computing systems, to retrieve data about the identifier; means for verifying if a predetermined number of responses comprising qualified data about the identifier, has been received from the receiving client computing systems; means for obtaining data about the identifier, from the received responses; and means for obtaining a classification of the identifier, from the obtained data.

14. A method for sending, from a receiving client computing system, data corresponding to an identifier of at least one computer element, the receiving system comprising a module for obtaining data corresponding to an identifier, and being further connected with a plurality of sending client computing systems according to claim 12, the method comprising:
a1) Receiving at least one identifier, from one of the plurality of sending client computing systems;
a2) Obtaining data corresponding to the received identifier, and sending the data to the sending client computing system which sent the identifier.

15. A method according to claim 14 wherein step (a2) of the obtaining of data comprises the sub steps of generating data corresponding to the identifier based on said identifier and sending the generated data.

16. A method according to claim 14 wherein the module for obtaining data comprises means for accessing a repository, the repository comprising data corresponding to identifiers, and wherein step (a2) comprises the sub steps of obtaining data corresponding to the received identifier from the repository and sending the obtained data.

17. A method according to claim 16 which further comprises a step (a3) of verifying if the received identifier comprises additional information not found in the data corresponding to the received identifier in the repository, and, in case of positive result, further comprises a step (a4) of storing in the repository said additional information.

18. System for sending data, from a receiving client computing system, said data corresponding to an identifier of at least one computer element, the receiving system comprising a module for obtaining data corresponding to an identifier, and being further connected with a plurality of sending client computing systems according to claim 12, the system comprising means for receiving at least one identifier, from one of the plurality of sending client computing systems, and means for obtaining data corresponding to the received identifier, and sending the data to the sending client computing system which sent the identifier.

19. A computer program comprising program instructions for causing a computer to perform the method according to any of claims 1 to 9.

20. A computer program according to claim 19, embodied on storing means.

21. A computer program according to claim 19, carried on a carrier signal.

22. A computer program comprising program instructions for causing a computer to perform the method according to any of claims 10 to 11.

23. A computer program comprising program instructions for causing a computer to perform the method according to any of claims 14 to 17.
